# EUROPEAN PATENT APPLICATION

(11) **EP 1 746 337 A1**
(43) Date of publication of application: **24.01.2007**
(21) Application number: 05736495.2
(22) Date of filing: 26.04.2005
(51) Int. Cl.: F17C 7/00, B60L 11/18, H01M 8/04

(54) **FUEL GAS STORING AND SUPPLYING DEVICE**

(30) Priority: 10.05.2004 JP 2004139574
(71) Applicant: TOYOTA JIDOSHA KABUSHIKI KAISHA, Toyota-shi, Aichi-ken 471-8571 (JP)
(72) Inventor: SHIGE, Masahiro, TOYOTA JIDOSHA KABUSHIKI KAISHA, Aichi-ken 471-8571 (JP)
(74) Representative: TBK-Patent
(86) International application number: PCT/JP2005/008405
(87) International publication number: WO 2005/108851

(57) **Abstract**

It is an object to provide a fuel gas storing and supplying device in which high-pressure fuel tanks are disposed parallel to each other and each tank is provided with a discharge valve and a regulator valve; the apparatus being able to suppress the amount of fuel gas that has to be consumed or discharged when the system is stopped, and able to increase fuel efficiency, and to able make it possible to stop the system rapidly. The fuel gas storing and supplying device of the present invention includes high-pressure fuel tanks that are piped and connected in parallel to a fuel gas receiver device, a discharge valve provided for each high-pressure fuel tank, and a regulator valve provided downstream of each discharge valve; and at least one discharge valve is closed when fuel gas is supplied.

## Description

### BACKGROUND

The present invention relates to a fuel gas storing and supplying device for supplying fuel gas to a fuel gas receiver device such as a fuel cell.

Because the amount of fuel (amount of hydrogen) that can be stored in a fuel cell system increased with pressure, a high-pressure tank is often used as a storage apparatus for supplying fuel gas (hydrogen gas). For example, Japanese Patent Application Laid-open No. 2002-372197 discloses a configuration in which high-pressure tanks are arranged in parallel and fuel gas is supplied in parallel.

With such configuration, when the system stops, fuel gas remains between a shutoff valve and a regulator valve, but from the standpoint of safety it is undesirable to stop the system in a state where the pressure inside the pipes is high because of fuel gas remaining therein. For this reason, it is usually necessary to consume or discharge the remaining high-pressure fuel gas when the system is stopped.

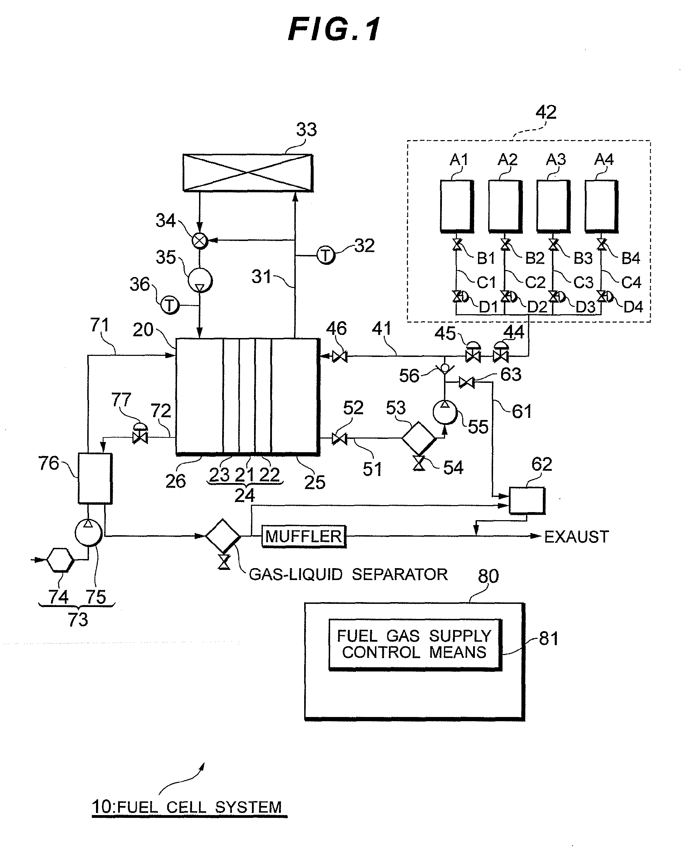

A case will be considered below where a fuel cell system is provided, as shown in Fig. 1, with a fuel gas storing and supplying device in which high-pressure tanks are arranged in parallel and a shutoff valve and a regulator valve are provided for each tank.

When fuel gas is supplied in parallel in such configuration, as described in Japanese Patent Application Laid-open No. 2002-372197, the high-pressure fuel gas located between the shutoff valves and regulator valves has to be consumed or discharged for all the tanks. Therefore, the amount of fuel gas that is consumed or discharged grows proportionally to the number of tanks. As a result, the fuel efficiency decreases. Another problem is that because the time necessary for the consumption of discharge increases, the system cannot be stopped rapidly. In particular, those problems cannot be ignored in a configuration based on the use of high-pressure tanks since the amount of remaining fuel gas increases with the tank pressure,.

### SUMMARY

Accordingly, it is an object of the present invention to provide a fuel gas supply and storage apparatus in which high-pressure fuel tanks are arranged in parallel and a discharge valve (for example, a shutoff valve) and a regulator valve are provided for each tank, wherein the amount of fuel gas that has to be consumed or discharged when the system is stopped is inhibited, fuel efficiency is increased, and the system can be stopped rapidly.

In order to resolve the above-described problems, the fuel gas storing and supplying device in accordance with the present invention includes high-pressure fuel tanks connected in parallel with a fuel gas receiver device, a discharge valve provided for each high-pressure fuel tank, and a regulator valve provided downstream of each discharge valve, wherein at least one discharge valve is closed when fuel gas is supplied. The fuel gas receiver device is, for example, a fuel cell.

It is preferred that the fuel gas storing and supplying device further includes control means for controlling each discharge valve so that fuel gas is supplied from one high-pressure fuel tank of the high-pressure fuel tanks connected in parallel at least at a time when a system stop request can be received.

It is preferred that when the tank pressure of a high-pressure fuel tank that is supplying fuel gas becomes equal to or less than a threshold, the control means opens the discharge valve of the high-pressure fuel tank that is to be next used as a fuel gas supply source and closes the discharge valve of the high-pressure fuel tank that is supplying fuel gas.

It is more preferred that the control means judges that there is insufficient gas and, even more preferably, stops the operation of the system having the fuel gas storing and supplying device when the tank pressure of each high-pressure fuel tank is equal to or less than the threshold.

In a preferred embodiment of the present invention, the control means may control each discharge valve so that the high-pressure fuel tanks connected in parallel are used as supply sources in order of increasing or decreasing tank pressure.

In a preferred embodiment of the present invention, the control means may open one discharge valve and keep the other discharge valves in a closed state when the supply of fuel gas is started.

It is preferred that the control means opens a discharge valve corresponding to the high-pressure fuel tank used during the previous system stop so that fuel gas from this high-pressure fuel tank is supplied when the supply of fuel gas is started.

It is more preferred that the control means open a discharge valve corresponding to the high-pressure fuel tank for which the tank pressure exceeds a threshold so that the fuel gas from this high-pressure fuel tank is supplied when the supply of fuel gas is started, when the tank pressure of a high-pressure fuel tank corresponding to the discharge valve that is planned to be opened is judged to be equal to or lower than the threshold.

It is even more preferred that the control means judges that there is insufficient gas when the tank pressure of each high-pressure fuel tank is judged to be equal to or below the threshold when the supply of fuel gas is started.

Furthermore, in the preferred embodiment of the present invention, the control means opens a discharge valve corresponding to the high-pressure fuel tank with the highest tank pressure, from among the high-pressure fuel tanks connected in parallel, when the supply of fuel gas is started.

In yet another preferred embodiment of the present invention, the control means opens a discharge valve corresponding to the high-pressure fuel tank with the lowest tank pressure, from among the high-pressure fuel tanks connected in parallel, when the supply of fuel gas is started.

Another fuel gas storing and supplying device in accordance with the present invention includes high-pressure fuel tanks connected in parallel with a fuel gas receiver device, a discharge valve provided for each high-pressure fuel tank, a regulator valve provided for each high-pressure fuel tank in a section provided parallel with the fuel gas receiver device in a channel connecting each discharge valve and the fuel gas receiver device, and control means for controlling each discharge valve so that fuel gas is supplied from one high-pressure fuel tank of the high-pressure fuel tanks connected in parallel at least at a time when a system stop request can be received.

It is preferred that when the tank pressure of a high-pressure fuel tank that is supplying fuel gas becomes equal to or less than a threshold, the control means opens the discharge valve of the high-pressure fuel tank that will be next used as a fuel gas supply source and closes the discharge valve of the high-pressure fuel tank that is supplying fuel gas.

As described above, the present invention provides a fuel gas supply and storage apparatus in which high-pressure fuel tanks are arranged in parallel and a discharge valve (for example, a shutoff valve) and a regulator valve are provided for each tank, wherein the amount of fuel gas that has to be consumed or discharged when the system is stopped is inhibited, fuel efficiency is increased, and the system can be stopped rapidly.

### DESCRIPTION OF THE DRAWINGS

Fig. 1 is a block diagram focused on a piping system of the fuel cell system of the present embodiment;
Fig. 2 is a block diagram of the main components of the fuel cell system of the present embodiment; and
Fig. 3 is a flowchart for explaining the operation of a fuel gas supply control means 81.

### DETAILED DESCRIPTION

The preferred embodiments of the present invention will be described below with reference to the drawings.

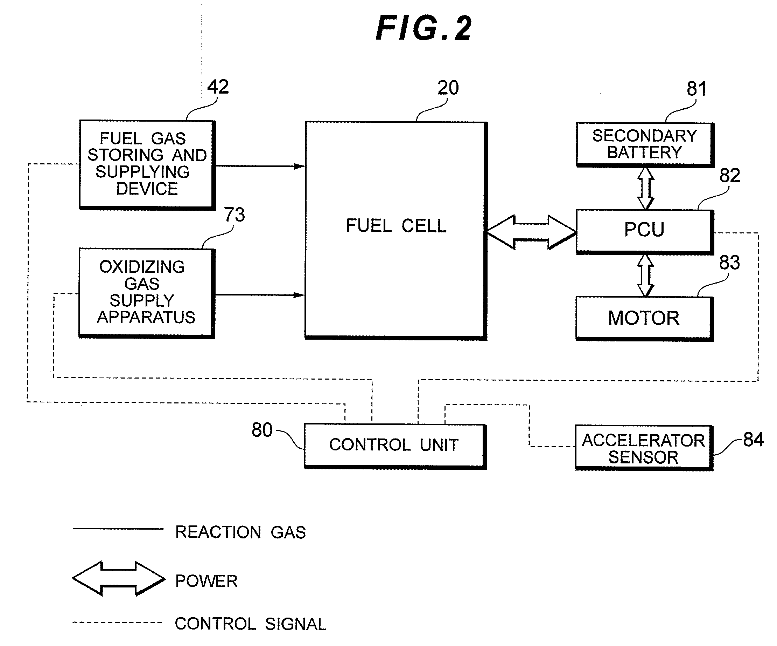

Fig. 2 illustrates a schematic configuration of the fuel cell system for installation on a fuel-cell electric automobile.

A fuel cell system 10 mainly includes a fuel gas storing and supplying device 42, an oxidizing gas supply apparatus 73, a fuel cell 20, and a control unit 80. Fuel gas is, for example, hydrogen gas, and oxidizing gas is, for example, air. The control unit 80 calculates the required power generation quantity of the fuel cell 20 from the accelerator opening degree detected with an accelerator sensor 84, controls the fuel gas storing and supplying device 42 and oxidizing ages supply apparatus 73 so as to obtain the desired power generation quantity, and adjusts the flow rate of fuel gas and the flow rate of oxidizing gas supplied to the fuel cell 20. A PCU 82 is a power control unit having an inverter and a DC/DC converter and serving to convert the DC power generated by the fuel cell 20 into an AC power, supply it to a motor 83 for running the vehicle, and accumulate the extra power in a secondary battery 81. The secondary battery 81 plays a role of a regenerative energy storage source during brake regeneration and an energy buffer during load fluctuations accompanying the acceleration and deceleration of the vehicle.

Fig. 1 shows a system configuration mainly focused on a piping system of the fuel cell system 10. As shown in Fig. 1, the fuel cell system 10 includes a system for supplying fuel gas to the fuel cell 20, a system for supplying an oxidizing gas, and a system for cooling the fuel cell 20.

The fuel cell 20 includes a membrane-electrode assembly 24 that is formed by, e.g., screen printing an anode electrode 22 and a cathode electrode 23 on both surfaces of a polymer electrolyte membrane 21 comprising, e.g., an ion-exchange membrane with proton conductivity formed from a fluororesin or the like. Both surfaces of the membrane-electrode assembly 24 are sandwiched with separators (not shown in the figure) having channels for fuel gas, oxidizing gas, and cooling water, and groove-like anode gas channel 25 and cathode gas channel 26 are formed between the separator and the anode electrode 22 and the cathode electrode 23, respectively. An oxidizing reaction represented by Formula (1) proceeds at the anode electrode 22, and a reduction reaction represented by Formula (2) proceeds at the cathode electrode 23. An electromotive reaction represented by Formula (3) proceeds in the fuel cell 20 as a whole.

H₂ → 2H⁺ + 2e⁻ (1)

(1/2)O₂ + 2H⁺ + 2e⁻ → H₂O (2)

H₂ + (1/2)O₂ → H₂O (3)

For the sake of convenience, the figure shows schematically the structure of a unit cell having the membrane-electrode junction 24, anode gas channel 25, and cathode gas channel 26, but the system actually has a stack structure in which a plurality of unit cells are connected in serial via the above-described separators.

The cooling system of the fuel cell system 10 includes a cooling passage 31 for circulating the cooling water, a temperature sensor 32 for detecting the temperature of the cooling water discharged from the fuel cell 20, a radiator (heat exchanger) 33 for releasing heat of the cooling water to the outside, a valve 34 for adjusting the quantity of cooling water flowing into the radiator 33, a pump 35 for circulating the cooling water under pressure, and a temperature sensor 36 for detecting the temperature of the cooling water supplied to the fuel cell 20.

In the fuel gas supply system of the fuel cell system 10, there are arranged a fuel gas passage 41 for supplying fuel gas to the anode gas channel 25 and a circulation passage 51 for circulating a fuel off-gas released from the anode gas channel 25 to the fuel gas passage 41. Those gas passages 41, 51 constitute a fuel gas circulation system.

The fuel gas passage (duct) 41 has installed therein regulator valves (medium-pressure regulator valve 44, low-pressure regulator valve 45) for regulating the pressure of fuel gas from the fuel gas storing and supplying device 42 and a shutoff valve 46 for opening and closing the fuel gas supply port (inlet port) of the fuel cell 20.

The fuel gas storing and supplying device 42 includes high-pressure fuel tanks A₁ to A₄ (the index indicates the tank number) connected in parallel to the fuel cell 20, which is a fuel gas receiver device, discharge valves B₁ to B₄ provided for each high-pressure fuel tank, channel sections C₁ to C₄ provided in parallel to the fuel cell 20 in the fuel gas passage 41 connecting the discharge valves B₁ to B₄ and the fuel cell 20, and regulator valves D₁ to D₄ provided for each high-pressure fuel tank in the channel sections C₁ to C₄ arranged in parallel. The discharge valve may be integrated with the high-pressure fuel tank. The number of the high-pressure fuel tanks, etc., can be determined according to the design, but here the number of the tanks provided in parallel is four.

As shown in the figure, fuel gas stored in the high-pressure fuel tanks A₁ to A₄ is discharged into the channel sections C₁ to C₄ when the discharge valves B₁ to B₄ open, the gas pressure is regulated with the regulator valves D₁ to D₄, and then fuel gas flows into the common channel sections of the fuel gas passage 41 and is supplied to the fuel cell 20. Because the control relating to such supply of fuel gas is implemented with functional means of the control unit 80, as described hereinbelow, the fuel gas storage and it can be considered that supply apparatus 42 includes the control unit 80.

The circulation passage 51 has disposed therein a shutoff valve 52 for discharging fuel off-gas, a gas-liquid separator 53 for recovering water from fuel off-gas, a water discharge valve 54 for recovering the recovered water into a tank (not shown in the figure) a circulation pump (pressurizing means) 55 driven by a motor, and a check valve 56 for preventing the backflow of the fuel gas of the fuel gas passage 41 to the circulation passage 51. The circulation pump 55 compresses fuel off-gas that received pressure loss when passing through the anode gas channel 25 and raises the pressure thereof to an appropriate level based on the control of the control unit 80 and returns off-gas into the fuel gas passage 41. Fuel off-gas merges with fuel gas supplied from the fuel gas supply apparatus 42 in the fuel gas passage 41 and is supplied to the fuel cell 20 and reused.

In the circulation passage 51, a discharge passage 61 is branched and arranged for discharging fuel off-gas discharged from the fuel gas circulation system to the outside of the vehicle via a diluter (for example, a hydrogen concentration reduction device) 62. A gas discharge valve (gas discharge means) 63 is installed in the gas discharge passage 61 and configured so as to perform gas discharge control of fuel off-gas. By opening and closing the gas discharge valve 63, fuel off-gas with increased concentration of impurities by the circulation inside the fuel cell is discharged to the outside, new fuel gas is introduced, and the cell voltage is prevented from dropping. Furthermore, pulsations of the inner pressure of the circulation passage 51 can be induced and water that accumulated in the gas passage can be removed.

On the other hand, the oxidizing gas supply system of the fuel cell system 10 has arranged therein an oxidizing gas passage 71 for supplying oxidizing gas to the cathode gas channel 26 and a cathode off-gas passage 72 for discharging cathode off-gas that is discharged from the cathode gas channel 26. The oxidizing gas passage 71 has disposed therein an oxidizing gas supply apparatus 73 for supplying compressed air as oxidizing gas into the oxidizing gas passage 71. The oxidizing gas supply apparatus 73 includes an air filter 74 for removing dust or the like contained in the air introduced from the atmosphere, and an air compressor 75 driven by a motor. Furthermore, in a humidifier 76 installed downstream of the oxidizing gas supply apparatus 73, a water exchange is performed between cathode off-gas that assumed a high-humidity state due to the water generated by the cell reaction of the fuel cell 20 and oxidizing gas in a low-humidity state that was introduced from the atmosphere. The back pressure of the cathode gas channel 26 is regulated to an almost constant pressure by a pressure regulating valve 77 disposed in the cathode off-gas passage 72. The cathode off-gas flowing through the cathode off-gas passage 72 is discharged to the outside of the vehicle via a gas-liquid separator or muffler according to the design, and part thereof flows into the diluter 62, mixes with fuel off-gas retained inside the diluter 62, dilutes fuel off-gas, and is discharged to the outside of the vehicle.

The control unit 80 is composed of a control computer system (not shown in the figure) and implements the operation control of each unit of the fuel cell system according to the control program (not shown in the figure). The control computer system can be composed of a publicly known available system.

For example, the control unit 80 receives sensor signals from a temperature sensor T and pressure sensor P (not shown in the figure) disposed in each passage, drives each motor and regulates the revolution speed of the circulation pump 55 and air compressor 74 according to the cell operation state (for example power load), and performs the opening-closing control of each valve or regulates the valve opening degree.

The control unit 80 of the present embodiment differs from the conventional ones in that it controls the discharge valves B₁ to B₄ or the like so that fuel gas is supplied from at least one high-pressure fuel tank of the high-pressure fuel tanks arranged and connected in parallel at least at a time when a system stop request can be received. In Fig. 1, the function relating to the supply control of fuel gas implemented by such control unit 80 is shown as functional means such as fuel gas supply control means 81.

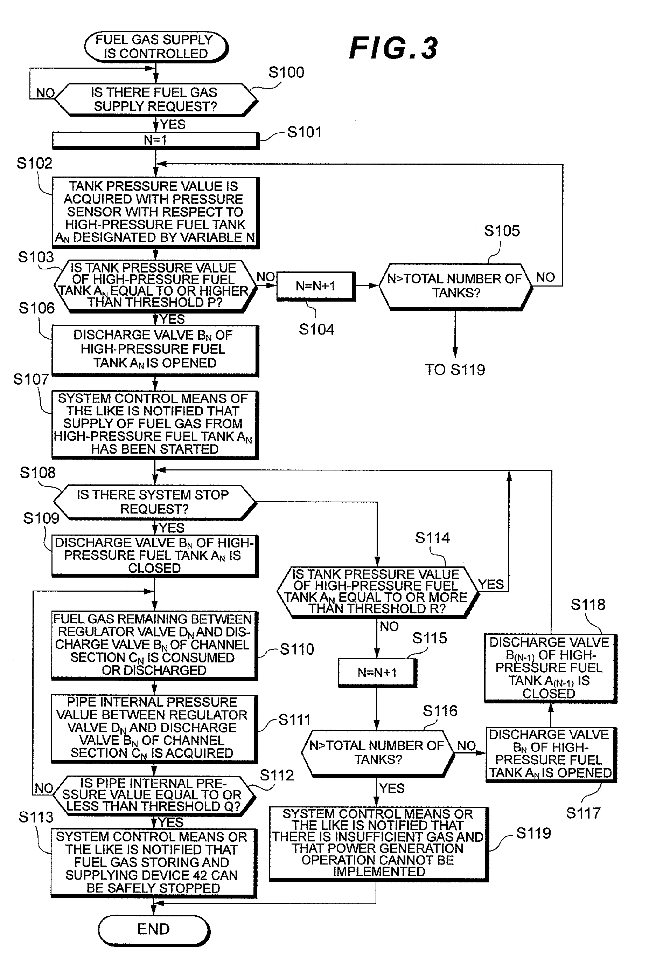

The operation of the control unit 80 relating to the supply of fuel gas (operation of the fuel gas supply control unit 81) will be explained hereinbelow with reference to the flowchart shown in Fig. 3.

When the fuel gas supply control means 81 receives a fuel gas supply request (S100) from another functional means (for example, system control means for controlling the entire operation of the fuel cell system 10; not shown in the figure) implemented in the control unit 80, the fuel gas supply control means 81 sets 1 to an index variable N designating a tank number of a high-pressure fuel tank for supplying fuel gas (S101).

Then, the fuel gas supply control means 81 acquires the tank pressure value with a pressure sensor (not shown in the figure) with respect to the high-pressure fuel tank A_{N} designated by the variable N (S102).

Then, the fuel gas supply control means 81 judges as to whether the tank pressure value of the high-pressure fuel tank A_{N} is equal to or higher than a predetermined threshold P (for example, 0.3 MPa) set as a minimum pressure suitable for supplying fuel gas (S103).

When the tank pressure value is less than the predetermined threshold P, the fuel gas supply control means 81 adds 1 to the variable N (S104). The fuel gas supply control means 81 then judges as to whether the variable N exceeds the total number of tanks (4 in the present embodiment) (S105) and returns to S102 when the total number of tanks is not exceeded.

On the other hand, when the total number of tanks is exceeded, the fuel gas supply control means 81 determines that there is no high-pressure fuel tank that can supply fuel gas, that is, that there is insufficient gas, informs the system control means or the like that there is insufficient gas and power generation operation cannot be implemented (S119), and ends the processing. Having received this information, the system control means or the like implements a stop processing if the fuel cell system 10 is in a power generation operation state.

When the tank pressure is equal to or higher than the predetermined threshold P in S103, the fuel gas supply control means 81 opens the discharge valve B_{N} of the high-pressure fuel tank A_{N} (S106) and informs the system control means or the like that the supply of the fuel gas from the high-pressure tank A_{N} has been started (S107). Having received this information, the system control means or the like implements a start processing of the fuel cell system 10 (starts power generation processing).

The fuel gas supply control means 81 then judges as to whether a system stop request has been issued by the system control means (S108).

When the system stop request has been issued, the fuel gas supply control means 81 implements the fuel gas supply stop processing (S109 to S113).

First, the discharge valve B_{N} of the high-pressure fuel tank A_{N} is closed (S109) and a consumption or discharge processing of the fuel gas remaining between the regulator valve D_{N} and discharge valve B_{N} of the channel section C_{N} is implemented (S110). Because the consumption or discharge processing of the remaining fuel gas can be performed with the configuration similar to that used in the prior art, for example, with the gas discharge passage 61, it is not illustrated by Fig. 1.

The fuel gas supply control means 81 then acquires the pipe internal pressure value between the regulator valve D_{N} and discharge valve B_{N} of the channel section C_{N} with a pressure sensor (not shown in the figure) (S111).

The fuel gas supply control means 81 then judges as to whether the acquired pipe internal pressure value is equal to or less than the predetermined threshold Q that is set as a pressure value that can ensure safety (S112). When the predetermined threshold Q is exceeded, the processing flow returns to S110 (that is, the consumption or discharge processing is continued). On the other hand, when the pipe internal pressure value is equal to or less than the predetermined threshold Q, the system control means or the like is informed (S113) that the fuel gas storing and supplying device 42 can be safely stopped, and processing is ended.

When no system stop request is issued in S108, the fuel gas supply control means 81 implements a switching judgment processing of high-pressure fuel tanks (S114 to S118).

First, it is judged as to whether the tank pressure value of the high-pressure fuel tank A_{N} is equal to or higher than a predetermined threshold R (for example, 0.3 MPa) set as a minimum pressure sufficient to continue the supply of fuel gas (S114).

When the tank pressure value is equal to or higher than the threshold R, the processing flow returns to S108 to judge whether a system stop request has been received.

On the other hand, when the tank pressure value is less than the predetermined threshold R, the fuel gas supply control means 81 adds 1 to the variable N (S115).

The configuration of the present embodiment is such that by adding 1 to the index variable N designating the tank number, the high-pressure fuel tank is selected in order of tank numbers and used as a fuel gas supply source. Therefore, the high-pressure fuel tank designated by the variable N after the addition of 1 is not selected in at least the present fuel gas supply processing and the tank pressure value thereof in principle exceeds the predetermined threshold R.

The fuel gas supply control means 81 then judges whether or not the variable N exceeds the total number of tanks (in the present embodiment this number is 4) (S116).

When the variable N exceeds the total number of tanks, the fuel gas supply control means 81 judges that there is no high-pressure fuel tank that can supply fuel gas, namely, that there is insufficient gas and notifies the system control means and the like that there is insufficient gas and the power generation operation cannot be implemented (S119). Having received this notification, for example, the system control means executes the stop processing of the fuel cell system 10.

When the variable N does not exceed the total number of tanks, the fuel gas supply control means 81 opens the discharge valve B_{N} of the high-pressure fuel tank A_{N} (S117) and then closes the discharge valve B_{(N-1)} of the high-pressure fuel tank A_{(N-1)} (S118), thereby switching the high-pressure fuel tank for supplying fuel gas. The processing flow then returns to S108 for judging whether a system stop request has been received.

Thus, in the present embodiment, the control is conducted so that the high-pressure fuel tanks, which are connected in parallel, are switched to supply fuel gas and it is always only one high-pressure fuel tank that is used to supply fuel gas at least at a time when a system stop request can be received (that is S108). As a result, when the system stop request is received and the supply of fuel gas from the fuel gas storing and supplying device 42 is stopped, the passage section between the discharge valves and regulator valves where fuel gas remains is only the section corresponding to this one high-pressure fuel tank. Therefore, the amount of the remaining fuel gas that has to be consumed or discharged is greatly reduced by comparison with the conventional configuration in which fuel gas remains in the sections corresponding to all the high-pressure fuel tanks arranged in parallel. As a result, fuel efficiency can be greatly increased. Furthermore, the time necessary for the consumption or discharge is also reduced and the system can be stopped rapidly.

Furthermore, in the present embodiment, only the discharge valves of the high-pressure fuel tank that presently supplies fuel gas and the high-pressure fuel tank that will start the supply thereafter are the objects of opening and closing. Therefore, the number of actuation cycles of each discharge valve can be reduced by comparison with the conventional configuration in which the discharge valves of all the high-pressure fuel tanks arranged in parallel are opened and closed each time the fuel cell system is started/stopped. As a result, the usability period of each discharge valve is extended and the fuel cell system 10 can be operated with good stability within a long period.

### (Modification Examples)

The present invention is not limited to the above-described embodiments and can be modified in a variety of ways. For example, a configuration may be employed in which a fuel tank (MH tank) having a hydrogen storage alloy is provided in addition to the high-pressure fuel tanks connected in parallel with the fuel cell.

Furthermore, for example, in the above-described embodiments, a configuration is employed in which the high-pressure fuel tanks are selected in order of tank numbers and used as the fuel gas supply sources, but a configuration in which the high-pressure fuel tanks are selected in order of increasing (or decreasing) tank pressure and used as the fuel gas supply sources, or a configuration in which the tank number of the high-pressure fuel tank that has been used during the previous fuel cell system stop is set as the variable N in S101 may be employed.

Furthermore, in accordance with the present invention, the effect of increasing the fuel efficiency is realized by decreasing the amount of fuel gas remaining in the fuel sections between the discharge valves and regulator valves. Therefore, for example, in the configuration comprising three or more high-pressure fuel tanks, by conducting control so that the supply of gas is not performed (that is, the corresponding discharge valve is closed) from at least one high-pressure fuel tank when fuel gas is supplied, the amount of the remaining fuel gas can be reduced by the amount corresponding to at least one high-pressure fuel tank by comparison with the configuration in which fuel gas is supplied from all the high-pressure fuel tanks and a favorable effect can be attained.

In addition to a fuel cell for receiving the supply of hydrogen (fuel gas) and generating power, the fuel gas receiver device may be an internal combustion engine for generating mechanical energy or thermal energy by receiving the supply of hydrogen gas or CNG (Compressed Natural Gas). Furthermore, the fuel gas receiver device may be a tank or pump apparatus that simply relays fuel gas to another supply destination.

## Claims

1. A fuel gas storing and supplying device comprising:
high-pressure fuel tanks connected in parallel with a fuel gas receiver device;
a discharge valve provided for each high-pressure fuel tank; and
a regulator valve provided downstream of each discharge valve,
wherein at least one discharge valve is closed when fuel gas is supplied.

2. The fuel gas storing and supplying device according to claim 1, further comprising control means for controlling each discharge valve so that fuel gas is supplied from one high-pressure fuel tank of the high-pressure fuel tanks connected in parallel at least at a time when a system stop request can be received.

3. The fuel gas storing and supplying device according to claim 2, wherein
when the tank pressure of a high-pressure fuel tank that is supplying fuel gas becomes equal to or less than a threshold, the control means opens the discharge valve of the high-pressure fuel tank that is to be next used as a fuel gas supply source and closes the discharge valve of the high-pressure fuel tank that is supplying fuel gas.

4. The fuel gas storing and supplying device according to claim 3, wherein
the control means judges that there is insufficient gas when the tank pressure of each high-pressure fuel tank is equal to or less than the threshold.

5. The fuel gas storing and supplying device according to claim 4, wherein
the control means stops the operation of a system including the fuel gas storing and supplying device when the control means judges that there is insufficient gas.

6. The fuel gas storing and supplying device according to any one of claims 3 through 5, wherein
the control means controls each discharge valve so that the high-pressure fuel tanks connected in parallel are used as supply sources in order of increasing tank pressure.

7. The fuel gas storing and supplying device according to any one of claims 3 through 5, wherein
the control means controls each discharge valve so that the high-pressure fuel tanks connected in parallel are used as supply sources in order of decreasing tank pressure.

8. The fuel gas storing and supplying device according to claim 2, wherein
the control means opens one discharge valve and keeps the other discharge valves in a closed state when the supply of fuel gas is started.

9. The fuel gas storing and supplying device according to claim 8, wherein
the control means opens a discharge valve corresponding to the high-pressure fuel tank used during the previous system stop so that fuel gas from this high-pressure fuel tank is supplied when the supply of fuel gas is started.

10. The fuel gas storing and supplying device according to claim 8 or 9, wherein
the control means opens a discharge valve corresponding to the high-pressure fuel tank for which the tank pressure exceeds a threshold so that fuel gas from this high-pressure fuel tank is supplied when the supply of fuel gas is started, when the tank pressure of a high-pressure fuel tank corresponding to the discharge valve that is planned to be opened is judged to be equal to or lower than a threshold.

11. The fuel gas storing and supplying device according to claim 10, wherein
the control means judges that there is insufficient gas when the tank pressure of each high-pressure fuel tank is judged to be equal to or below the threshold when the supply of fuel gas is started.

12. The fuel gas storing and supplying device according to claim 8, wherein
the control means opens a discharge valve corresponding to the high-pressure fuel tank with the highest tank pressure, from among the high-pressure fuel tanks connected in parallel, when the supply of fuel gas is started.

13. The fuel gas storing and supplying device according to claim 8, wherein the control means opens a discharge valve corresponding to the high-pressure fuel tank with the lowest tank pressure, from among the high-pressure fuel tanks connected in parallel, when the supply of fuel gas is started.
